**Europäisches Patentamt**

**European Patent Office**

**Office européen des brevets**

(19)

(11) Veröffentlichungsnummer : **0 175 049**
**B1**

(12) EUROPÄISCHE PATENTSCHRIFT

(45) Veröffentlichungstag der Patentschrift :
21.12.88

(51) Int. Cl.⁴ : **E 05 C   3/02**

(21) Anmeldenummer : 85104693.8

(22) Anmeldetag : 18.04.85

(54) Steckschlüsselbetätigbarer Vorreiberverschluss.

(30) Priorität : 19.09.84 EP 84111169

(43) Veröffentlichungstag der Anmeldung :
26.03.86 Patentblatt 86/13

(45) Bekanntmachung des Hinweises auf die Patenterteilung : 21.12.88 Patentblatt 88/51

(84) Benannte Vertragsstaaten :
AT BE CH DE FR GB IT LI LU NL SE

(56) Entgegenhaltungen :
EP--A-- 0 015 051
EP--A-- 0 036 141
EP--A-- 0 175 012
EP--A-- 0 175 211
DE--U-- 7 338 007
US--A-- 3 907 348

(73) Patentinhaber : Ramsauer, Dieter
Am Neuhauskothen 20
D-5620 Velbert 11 (DE)

(72) Erfinder : Ramsauer, Dieter
Am Neuhauskothen 20
D-5620 Velbert 11 (DE)

(74) Vertreter : Stratmann, Ernst, Dr.-Ing.
Patentanwälte Dr.-Ing. Ernst Stratman Dr.rer.nat. Gescha Siewers Schadowplatz 9
D-4000 Düsseldorf 1 (DE)

## Beschreibung

Die Erfindung betrifft einen steckschlüsselbetätigbaren Vorreiberverschluß, mit einem in einem Vorreibergehäuse betätigbaren, drehbar gelagerten Schließkern, wobei der Schließkern aus einem vorderen Teilstück zur Aufnahme des Steckschlüssels, einem Rumpf oder Mittelstück und einem Fuß oder hinteren Teilstück besteht, wobei das Verschlußgehäuse an seinem vorderen Ende einen den Schlüsselbart in zumindest einer Schlüsselstellung hindurchlassenden Durchbruch aufweist.

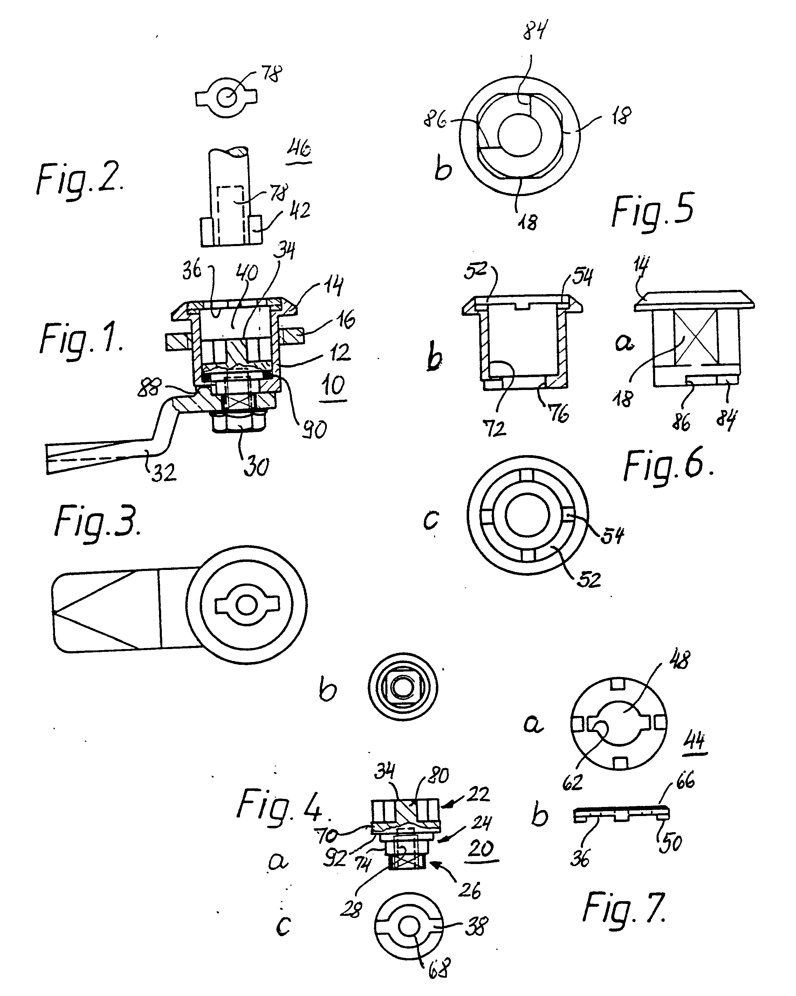

Ein derartiger Vorreiberverschluß ist in der Form einer Fensterverriegelungseinrichtung aus der US-A-3907348, die auch die Grundlage für die Fassung des Oberbegriffs des Hauptanspruchs bildet, bereits bekannt, siehe die dortigen Fig. 1 und 3.

Einen ähnlichen Stand der Technik stellt auch die EP-A-0 036 141 dar, wobei der Verschluß gemäß der letztgenannten Entgegenhaltung wegen seines durch ein Türblatt oder dgl. hindurchsteckbaren Gehäuses eine höhere Stabilität aufweist und außerdem — da Teile des Verschlusses in das Türblatt bzw. in dem hinter dem Türblatt liegenden Raum verlegt werden können — weniger weit nach vorne über das Türblatt vorstehen. Derartige hindurchsteckbare Gehäuse aufweisende Vorreiberverschlüsse werden insbesondere für elektrische Schaltschränke, aber auch sonst in der Industrie eingesetzt, wobei zum Verschluß eines Schrankes ein oder auch oft mehrere Vorreiberverschlüsse pro Türblatt benutzt werden, die insbesondere mittels Doppelbartschlüssel betätigt werden.

Der aus der US-A-3 907 348 bekannte Verschluß ist dagegen auf die Außenfläche des Fensterrahmens aufgeschraubt, was für Fensteranwendungen deswegen von Vorteil ist, weil die Fensterflügel meist verhältnismäßig dicke Rahmen besitzen oder aus Hohlkammerbauteilen bestehen, in denen durchsteckbare Gehäuse weniger vorteilhaft sind. Nachteilig ist allerdings, das die die Vorreiberzunge haltende Betätigungswelle in einem Gehäuse gelagert werden muß, das auf die Außenfläche des Fensterrahmens aufgeschraubt wird und dadurch eine lange ungelagerte Wellenerstreckung in den Fensterrahmen hineinreicht, auf deren Ende dann erst der Vorreiber aufgesetzt ist. Das führt zu verhältnismäßig großen Hebelkräften in der Verschlußlagerung und macht den Vorreiberverschluß für Schranktüren weniger geeignet. Hinzukommt, daß durch das Aufschrauben des Verschlusses auf den Fensterrahmen der Verschluß in den Raum weit vorsteht und — zumindest bei Anwendung bei Schränken — ein Vorbeigehen von Personen an dem Verschluß behindern könnte.

Beide Verschüsse haben den weiteren Nachteil, daß der Schließkern von hinten in das Verschlußgehäuse eingeschoben und dann erst von einer Abschlußplatte festgehalten wird, wobei in einem Falle die Platte durch Gehäuseeindrückungen fixiert wird, während im anderen Falle die Platte auf vom Gehäuse vorspringende Nasen aufgeschoben und diese dann breitgedrückt werden. In beiden Fällen dient diese Platte im wesentlichen auch als Lager für das den Vorreiber haltende hintere Teilstück des Schließkerns. Somit wird gerade dieser Halteplatte, die lediglich durch eingedrücktes bzw. breitgequetschtes Material gehalten wird, besonders hohen Hebelkräften ausgesetzt, die von der Vorreiberzunge in Schließstellung des Verschlusses ausgehen.

Bei vielen Anwendungen, insbesondere in der Industrie, wo derartige Verschlüsse für elektrische Schaltschränke eingesetzt werden, müssen besondere Vorkehrungen getroffen werden, damit nicht jeder beliebige derartige Türen öffnen kann. Es ist daher beispielsweise in der Bundesrepublik Deutschland durch eine entsprechende Norm (DIN 43668) vorgeschrieben, für Türen von elektrischen Schaltschränken sogenannte Doppelbartschlüssel in zwei unterschiedlich festgelegten Abmessungen vorzusehen, wobei mit Hilfe des Doppelbartschlüssels der einen Abmessungsart ausschließlich Verschlüsse von Niederspannungsanlagen betätigt werden können, während mit Doppelbartschlüsseln der anderen Abmessung auch Hochspannungsanlagen betätigbar sind.

Derartige Doppelbartschlüssel bestimmter Abmessung besitzen zwei sich gegenüberliegende Schlüsselbärte sowie eine axiale Bohrung von jeweils genormten Abmessungen. Zu diesen Doppelbartschlüsseln gehört ein ebenfalls hinsichtlich seiner Abmessungen genormtes Schlüsselloch, das bei den beiden genannten Entgegenhaltungen von einem Schlüsselfang gebildet wird.

Nachteilig bei den beiden genannten bekannten Verschlüssen ist neben dieser konstruktionsbedingten mechanischen Schwäche noch die Tatsache, daß für unterschiedliche Doppelbartschlüsselgrößen jeweils unterschiedliche Gehäuse gespritzt werden müssen. Viel günstiger wäre es, mit einem Gehäuse festgelegter Bauart auskommen zu können, was dann nur so ergänzt wird, daß eine Anpassung an die Größe des zu benutzenden Doppelbartschlüssels erfolgt.

In der EP-A-0 015 051 ist eine schlüsselbetätigbare Einrichtung beschrieben, die mit jeweils nur zu einer individuellen Einrichtung passenden Bartschlüsselart betätigbar ist und insoweit wie ein normales Zylinderschloß arbeitet, aber robuster ist. Der die Funktion des Zylinders ausübende Teil wird von vorne in das Verschlußgehäuse eingeschoben und dann mittels einer « Schlüssellochplatte » festgehalten, die becherförmig ausgebildet ist und über das Vorderende des Gehäuses geschoben werden kann. Wie diese Platte im einzelnen am Gehäuse verankert ist, geht aus der Druckschrift jedoch nicht hervor.

Aus der DE-U-7 338 007 ist ein Vorreiberverschluß bekannt, dessen Schließkern mit einer Nut ausgestattet ist, die zur Aufnahme einer O-Ring-

Dichtung dient.

Aufgabe der Erfindung ist es, den steckschlüsselbetätigbaren Vorreiberverschluß der eingangs genannten Art dahingehend zu verbessern, daß der konstruktive Zusammenhalt verbessert wird, so daß der Verschluß auch stärkeren Belastungen durch die vom Vorreiber ausgehenden Hebelkräfte gewachsen ist, und daß die Möglichkeit geschaffen wird, beim Herstellungsverfahren mit nur einem Gehäuse durch alternatives Verwenden von Zusatzbauteilen eine Anpassung an z. B. Doppelbartschlüssel unterschiedlicher Abmessungen vornehmen zu können.

Gelöst wird diese Aufgabe dadurch, daß das Gehäuse an seinem Vorderende eine Maske aufweist, die den den Schlüsselbart in zumindest einer Schlüsselstellung durchlassenden Durchbruch sowie axial in das Gehäuseinnere weisende Vorsprünge zur drehstarren Verankerung der Maske in der Gehäusestirnfläche aufweist.

Dadurch, daß das Gehäuse nicht selbst den den Schlüsselbart in zumindest einer Schlüsselstellung durchlassenden Durchbruch aufweist, sondern stattdessen eine am Vorderende des Gehäuses vorgesehen Maske, ergibt sich zum einen für die Herstellung des Verschlusses die Möglichkeit, je nach der Form des Schlüssels, insbesondere des Doppelbartschlüssels, eine unterschiedliche Maske bei gleichem Gehäuse zu wählen und dadurch das Produzieren und auf Lager halten von unterschiedlichen Gehäusen zu ersparen, was Kostenvorteile hat, da die Herstellung und Lagerung unterschiedlicher Masken wesentlich einfacher und preiswerter ist, dies aufgrund der einfacheren Form, zum anderen ist auch die Stabilität des fertigen Vorreiberverschlusses größer, weil die hohen vom Vorreiber ausgehenden Hebelkräfte nicht auf ein erst beim Herstellungsvorgang mit dem Gehäuse durch Materialverdrängung befestigtes Teil aufgenommen werden müssen, sondern von Teilen, die mit dem Verschlußgehäuse von vorneherein einstückig sind und daher wesentlich größere Kräfte aufnehmen können.

Die axial in das Gehäuseinnere weisenden Vorsprünge der drehstarren Verankerung der Maske in dem Gehäuse der Stirnfläche lassen sich derartig ausgestalten, daß sich eine ausreichende Preßpassung ergibt, so daß weitere Befestigungsmaßnahmen unter Umständen entbehrlich sind. Jedoch kann die Maske auch durch eine Blechkappe gehalten sein, die den Außenrand des Schlüsselfangs umgreift, wie in einem der Unteransprüche (Anspruch 5) gelehrt wird. Beim Anspruch 6 werden als alternative Befestigungsmöglichkeiten Verklebung, Verstemmung und feste Einpressung des Schlüsselfanges ausdrücklich genannt.

Im Anspruch 7 wird die Maske von einer den Außenrand des Schlüsselfangs umgreifenden Kappe gebildet.

Insbesondere bei Anwendung von Doppelbartschlüsseln kann die Maske entweder einen einfachen Doppelschlitz aufweisen, was bedeutet, daß der Schlüssel bei geöffnetem Verschluß und vorhandener Arretierungseinrichtung nicht abziehbar ist, so daß in diesem Falle der Verschluß für Rechts- bzw. Linksbetrieb unterschiedlich ausgeführt sein muß.

Soll der Schlüssel jedoch auch bei geöffnetem Verschluß abziehbar sein, was beispielsweise sinnvoll ist, wenn mit nur einem Schlüssel mehrere an einem Türblatt befindliche Verschlüsse geöffnet werden sollen, können — wenn beispielsweise das Schloß noch eine zusätzliche Arretierung aufweist, wie bei den beiden eingangs genannten Druckschriften US-A-3907348 bzw. EP-A-0 036 141 — der Maske zwei zueinander senkrechte Doppelschlitze gegeben werden, was noch den weiteren Vorteil hat, daß dann mit einer einzigen Schloßkonstruktion sowohl Rechts — wie auch Linksbetrieb möglich ist.

Die Erfindung wird nachfolgend anhand von Ausführungsbeispielen näher erläutert, die in den Zeichnungen dargestellt sind.

Es zeigt :

Fig. 1 in einer Axialschnittansicht einen erfindungsgemäß ausgestalten, steckschlüsselbetätigbaren Vorreiberverschluß gemäß der Erfindung ;

Fig. 2 einen zugehörigen Doppelbartschlüssel in Seitenansicht und Draufsicht ;

Fig. 3 eine Draufsicht auf den Verschluß der Fig. 1 ;

Fig. 4 in einer teilweise geschnittenen Seitenansicht (a), einer Ansicht von unten (b) und einer Ansicht von oben (c) den Schließkern des Vorreiberverschlusses ;

Fig. 5 eine Ansicht von hinten auf das Verschlußgehäuse ;

Fig. 6 eine Seitenansicht (a), eine Schnittansicht (b) und eine Ansicht (c) von vorn auf das Schließgehäuse ; und

Fig. 7 eine Draufsicht (a) und eine Seitenansicht (b) auf die Maske.

In Fig. 1 ist ein steckschlüsselbetätigbarer Vorreiberverschluß gemäß einer Ausführungsform der Erfindung in einer axialen Schnittansicht wiedergegeben. Der Vorreiberverschluß 10 umfaßt ein zylindrisches Gehäuse 12, das in einen Schlüsselfang 14 ausläuft, wobei das Gehäuse 12 an seiner Zylinderaußenseite ein Gewinde trägt, um das Gehäuse mittels einer Mutter 16 innerhalb eines Durchbruchs im Türblatt festlegen zu können. Das Gehäuse ist in den Fig. 5 und 6 nochmals als Einzelteil dargestellt, und zwar in einer axialen Schnittansicht (Fig. 6 b), einer Seitenansicht (Fig. 6 a), einer Ansicht von unten (Fig. 5) und einer Ansicht von oben (Fig. 6 c). Aus diesen Figuren ergibt sich außerdem, daß das Gehäuse an zumindest einer Seite eine Abflachung 18 besitzt, die mit einem entsprechenden sehnenartigen Vorsprung des Stanzloches im Türblatt derart zusammenarbeitet, daß sich eine Drehsicherung ergibt. Es können auch zwei sich gegenüberliegende oder auch vier jeweils im Abstand von 90° zueinanderliegende derartige Abflachungen vorgesehen werden, falls das Gehäuse in z. B. zwei oder vier unterschiedlich gedrehten Stellungen montierbar sein soll. Die in Fig. 5 zu erkennende Ausführungsform weist derartige vier Abflachungen 18 auf.

**0 175 049**

Innerhalb des Gehäuses 12 des Vorreiberverschlusses 10 ist ein Schließkern oder Schließwelle 20 drehbar angeordnet, wobei der Schließkern 20 aus einem vorderen Teil oder Kopf 22 zur Aufnahme des Steckschlüssels 46, einem Rumpf oder Mittelstück 24 und einem prismatischen, insbesondere quadratischen Fuß oder hinterem Teil 26 besteht, das an seinem Ende eine axiale, mit Gewinde versehene Einsenkung wie Gewindesackloch 28 aufweist, in das eine Befestigungsschraube 30 für die Vorreiberzunge 32 aufgenommen ist.

Um die gegenüber dem Stand der Technik verbesserte Zusammenbaubarkeit und Stabilität zu erreichen, ist das Verschlußgehäuse 12 becherförmig ausgestaltet, wobei der Becherboden eine Axialanschlaglagerung für den Schließkern bildet. Das bedeutet aber, daß der Schließkern nicht von hinten in das Gehäuse eingesetzt werden kann, wie beim Stand der Technik, sondern der Zusammenbau des Verschlusses derart möglich sein muß, daß der Schließkern von der vorderen Öffnung des Bechers her eingesetzt werden kann.

Um dies erreichen zu können, umfaßt das Gehäuse 12 einen Schlüssellochdeckel oder Maske 44, siehe in Fig. 7 eine Draufsicht (a) sowie eine Seitenansicht (b), die mittig einen den Schlüsselbart 46 in seiner jeweiligen Form, beispielsweise die in Fig. 2 dargestellte Doppelbartform, in zumindest einer Schlüsselstellung durchlassenden Durchbruch 48 aufweist, aber auch beispielsweise einen solchen Durchbruch aufweisen kann, daß der Schlüsselbart 46 in zwei zueinander senkrechten Stellungen hindurchgesteckt werden kann (nicht dargestellt).

Diese (nach Einbringung des Schließkerns nachträglich montierbare) Maske 44 besitzt axial in das Gehäuseinnere weisende Vorsprünge 50, die es ermöglichen, die Maske stirnseitig, also von vorn in eine entsprechende Einsenkung 52 des Gehäuses 12 drehstarr einzusetzen, wobei von der Einsenkung 52 ausgehende Rücksprünge 54 an den Stellen der Vorsprünge 50 für eine Drehstarrheit Sorge tragen, siehe Figuren 6 und 7.

Die Maske 44 kann durch eine hier nicht dargestellte Blechkappe am axialen Herausfallen gehindert werden, wobei nach Montage des Schließkerns 20 sowie der Maske 44 von der Stirnseite des Gehäuses 12 her nur noch diese Blechkappe auf den Schlüsselfang 14 des Gehäuses 12 aufgesetzt und ein überspringender Randbereich der Blechkappe in ggf. vorhandene Rücksprungbereiche auf der Auflagefläche des Gehäuseschlüsselfanges auf dem Türblatt umgebördelt zu werden braucht, um so die Maske festzulegen. Die Maske kann aber auch in ihrem vom Schlüsselfang gebildeten Bett verklebt, verstemmt oder auf andere Weise fest eingepreßt sein. Sie kann mit einer Blechkappe der geschilderten Art auch einstückig sein. In diesem Falle könnte sogar auf eine besondere Drehsicherung der Maske verzichtet werden.

Der erfindungsgemäße Vorreiberverschluß läßt sich als arretierbarer Verschluß verwirklichen, aber auch, wie hier dargestellt, als ein Verschluß ohne Arretiervorrichtung, wobei es jedoch günstig sein kann, gemäß einer besonders günstigen Ausführungsform die Gehäuselänge derart zu gestalten, daß zwischen der vorderen Stirnfläche 34 des Schließkerns 20 und der rückwärtigen Fläche 36 der Maske 44 ein zylindrischer Raum 40 entsteht, in dem der Bart 42 des Schlüssels 46 frei drehbar ist. Auf diese Weise stört es nicht mehr, wenn sich der Schließkern 20 bezüglich der Maske 44 etwas verschoben hat, da der Schlüssel 46 nach Einstecken in den Verschluß 10 solange unbehindert von Maske 44 und Kontur des Kopfes 22 des Schließkerns 20 gedreht werden kann, bis der Schlüssel mit seiner Bartkontur 42 in die entsprechenden Einsenkungen des Kernkopfes 22 einrastet.

Falls eine Verriegelung in irgendeiner Weise vorgesehen ist, beispielsweise außerhalb des Veschlußgehäuses, so daß eine ungewollte Verschiebung zwischen Kern 20 und Maske 44 nicht auftreten kann, kann auf den freien Raum 40 auch verzichtet werden und dadurch die Baulänge um die Axialerstreckung dieses Raumes 40, die gleich oder geringfügig größer als die axiale Erstreckung des Schlüsselbartes 42 gewählt ist, verkürzt werden.

Die Bedienung des Verschlusses mit Hilfe des Schlüssels 46 erfolgt derart, daß zunächst der Schlüssel, hier gemäß Fig. 2 ein Doppelbartschlüssel, durch den von der Maske 44 gebildeten Durchbruch 48 hindurchgeführt wird, bis die vordere Stirnfläche des Schlüssels 46 die vordere Stirnfläche 34 des Kerns 20 erreicht. Falls der Schlüssel nicht genau ausgerichtet ist, erkennt dies die Bedienungsperson an dem sich ergebenden Widerstand gegen ein weiteres axiales Einführen des Schlüssels. Wenn er jetzt den Schlüssel geringfügig hin- und herdreht, wird in der entsprechenden Drehstellung, in der die Bartvorsprünge 42 mit den Schlitzen 38 des Schließkerns 20 fluchten, der Schlüssel vollständig in die Kontur des Kerns 20 eindringen, wobei der Dorn 68 des Kerns 20 in die entsprechende Bohrung 78 des Steckschlüssels eindringt. (Gemäß deutscher Norm beträgt der Durchmesser dieses Dornes 68 3 mm für Niederspannungsanlagen und 5 mm für Hochspannungs- und Niederspannungsanlagen, während der Durchmesser der Bohrung 78 3,2 bzw. 5,2 mm beträgt).

Nach dem Eindringen der zwei Bärte 42 des Schlüssels 46 in den vom Bauteil 20 gebildeten Schlitz 38 bewirkt eine Drehung des Schlüssels das Mitnehmen des Kerns 20 und damit auch der auf dessen prismatischem Ende 26 aufgesetzten und mit der Befestigungsschraube 30 gehaltenen Vorreiberzunge 32.

Nach dem Verdrehen um beispielsweise 90° (dies möge der Offenstellung entsprechen) läßt sich bei der in Fig. 7 dargestellten Konturmaske 44 der Schlüssel nicht sofort abziehen. Soll der Schlüssel jedoch in dieser Stellung sofort abziehbar sein, wird man die Maske 44 mit einem kreuzförmigen Durchbruchprofil (nicht dargestellt) versehen, um so die Bärte 42 des Schlüssels 46 auch in dieser Stellung durch die Maske 44 hindurchziehen zu können.

Ist, wie dargestellt, der freie Raum 40 vorgesehen, ist eine Maske gemäß Fig. 7 jedoch ausreichend, da hier der Schlüssel frei um 90°· zurückgedreht und dann aus der ursprünglichen Kontur wieder herausgezogen werden kann.

Die gesamte Konstruktion, sei es mit oder ohne Arretierung, hat den großen Vorteil, daß die Schließwelle außerordentlich stabil in dem Gehäuse 14 gelagert werden kann. Dadurch ergibt sich trotz der sehr kurzen Baulänge eine stabile Führung der Schließwelle mit der daran befestigten Vorreiberzunge. Diese stabile Schließwellenlagerung ergibt sich im Bereich des Rumpfes des Mittelstücks, insbesondere im geschlossenen kreisförmigen Umfangsbereich 70, siehe Fig. 1 und Fig. 4, der sich innerhalb des Gehäuses 12 im Bereich seiner Innenwand 72 (Fig. 6) abstützt. Eine weitere Führung wird von dem Wellenstumpfbereich 74 erbracht, der in dem entsprechenden Durchbruch 76 des Gehäuses 12 gebildet wird.

Schließlich wird jedoch auch noch das obere Ende 80 des Schließkerns 22 geführt, und zwar dadurch, daß sich dieses obere Ende 78 ebenfalls an der entsprechenden Wand 72 abstützen kann.

Es sei noch ergänzt, daß in üblicher Weise das Gehäuse Drehbegrenzungsanschläge 84, 86 für eine von der Zunge 32 ausgehende Anschlagsnase 88 bilden kann.

Der erfindungsgemäße Vorreiberverschluß läßt sich auch ohne Schwierigkeiten gasdicht gestalten, beispielsweise durch die Anordnung einer O-Ringdichtung 90, die in einem schulterartigen Rücksprung 92 im Mittelstück 24 untergebracht werden kann.

## Patentansprüche

1. Steckschlüsselbetätigbarer Vorreiberverschluß (10), mit einem in einem Verschlußgehäuse (12) betätigbaren, drehbar gelagerten Schließkern (20), wobei der Schließkern (20) aus einem vorderen Teilstück (22) zur Aufnahme des Steckschlüssels (46), einem Rumpf (24) oder Mittelstück und einem Fuß (26) oder hinterem Teilstück besteht, wobei das Verschlußgehäuse an seinem vorderen Ende einen den Schlüsselbart in zumindest einer Schlüsselstellung durchlassenden Durchbruch aufweist, und wobei auf den Fuß (26) die Vorreiberzunge (32) drehstarr aufsteckbar und fixierbar ist, dadurch gekennzeichnet, daß das Gehäuse (12) durch das Türblatt oder dgl. hindurchsteckbar ist und an seinem Vorderende eine Maske (44) aufweist, die den den Schlüsselbart (42) in zumindest einer Schlüsselstellung hindurchlassenden Durchbruch (48) sowie axial in das Gehäuseinnere weisende Vorsprünge (50) zur drehstarren Verankerung der Maske (44) in der Gehäusestirnfläche (52, 54) aufweist.

2. Vorreiberverschluß nach Anspruch 1, dadurch gekennzeichnet, daß zwischen der vorderen Stirnfläche (34) des Schließkerns (20) und

rückwärtigen Fläche (36) der Maske (44) ein zylindrischer Raum (40) freigelassen ist, in dem der Bart (42) des Schlüssels (46) frei drehbar ist.

3. Vorreiberverschluß nach Anspruch 1 oder 2, dadurch gekennzeichnet, daß die Stirnfläche (66) der Maske (44) mit der Schlüsselfangstirnfläche fluchtet oder bezüglich dieser nur geringfügig zurückspringt.

4. Vorreiberverschluß nach einem der Ansprüche 1 bis 3, dadurch gekennzeichnet, daß der Kopf (22) des Kerns (20) am Übergang zum Mittelstück (24) einen Umfangsrücksprung (92) zur Aufnahme einer O-Ringdichtung (90) besitzt.

5. Vorreiberverschluß nach einem der Ansprüche 1 bis 4, dadurch gekennzeichnet, daß die Maske (44) durch eine Blechkappe gehalten ist, die den Außenrand des Schlüsselfangs (14) umgreift.

6. Vorreiberverschluß nach einem der Ansprüche 1 bis 4, dadurch gekennzeichnet, daß die Maske (44) im Schlüsselfang (14) verklebt, verstemmt oder fest eingepreßt ist.

7. Vorreiberverschluß nach einem der Ansprüche 1 bis 4, dadurch gekennzeichnet, daß die Maske (44) von einer den Außenrand des Schlüsselfangs (14) umgreifenden Kappe gebildet ist.

8. Vorreiberverschluß nach einem der Ansprüche 1 bis 7, dadurch gekennzeichnet, daß für Doppelbartschlüssel (46) die Maske einen Doppelschlitz oder zwei zueinander senkrecht angeordnete Doppelschlitze besitzt.

## Claims

1. Key-operated rotary latch (10) having a rotatably supported latch core (20) capable of being actuated in a latch housing (12), the latch core (20) comprising a front part piece (22) to receive the key (46), a body (24) or middle piece and a foot (26) or rear part piece, the latch housing having at its front end an opening that allows the key bit through in at least one key position, and the rotary tongue (32) being capable of being fitted and fixed non-rotatably on the foot (26), characterised in that the housing (12) is capable of being inserted through the door leaf or the like and has at its front end a mask (44) which has the opening (48) allowing the key bit (42) through in at least one key position and projections (50) pointing axially into the housing interior for anchoring the mask (44) non-rotatably in the housing facing surface (52, 54).

2. Rotary latch as claimed in claim 1, characterised in that between the front facing surface (34) of the latch core (20) and rear surface (36) of the mask (44) a cylindrical space (40) is left free in which the bit (42) of the key (46) is freely rotatable.

3. Rotary latch as claimed in claim 1 or 2, characterised in that the facing surface (66) of the mask (44) is in alignment with the key holder facing surface or recoils only slightly relative to the latter.

4. Rotary latch as claimed in one of claims 1 to 3, characterised in that the head (22) of the core (20) at the transition to the middle piece (24) has a circumferential recoil (92) to receive an O-ring seal (90).

5. Rotary latch as claimed in one of claims 1 to 4, characterised in that the mask (44) is held by a sheet-metal cap which grasps the outer edge of the key holder (14).

6. Rotary latch as claimed in one of claims 1 to 4, characterised in that the mask (44) is glued, wedged, or pushed securely into the key holder (14).

7. Rotary latch as claimed in one of claims 1 to 4, characterised in that the mask (44) is formed from a cap grasping the outer edge of the key holder (14).

8. Rotary latch as claimed in one of claims 1 to 7, characterised in that for double bit keys (46) the mask has a double slot or two double slots arranged perpendicularly to each other.

## Revendications

1. Dispositif de fermeture à tourniquet (10) pouvant être manoeuvré par une clé à canon, qui comporte un bloc de fermeture (20) qui peut être manoeuvré de manière à tourner dans une enveloppe (12) du dispositif de fermeture à tourniquet, le bloc de fermeture (20) étant constitué par une pièce avant (22) qui reçoit la clé à canon (26), par un corps (24) ou pièce médiane et par un talon (26) ou pièce arrière, l'enveloppe du dispositif de fermeture comportant à son extrémité avant une ouverture permettant le passage du panneton de clé dans au moins une position de la clé et la languette de tourniquet (32) pouvant être montée sur le talon (26) sans possibilité de rotation relative et fixée, caractérisé en ce que l'enveloppe (12) peut être engagée de manière à traverser le battant de la porte ou un élément analogue et comporte à son extrémité avant un masque (44) qui comprend une ouverture (48) qui laisse passer le panneton de clé (42) au moins dans une position de la clé et des parties (50) qui font saillie dans le sens axial à l'intérieur de l'enveloppe de manière à assurer l'ancrage du masque (44), sans possibilité de rotation relative, dans la surface frontale (52, 54) de l'enveloppe.

2. Dispositif de fermeture à tourniquet selon la revendication 1, caractérisé en ce qu'entre la surface frontale avant (34) du bloc de fermeture (20) et la surface arrière (36) du masque (44), il comporte un espace libre cylindrique (40) dans lequel le panneton (42) de la clé (46) peut tourner librement.

3. Dispositif de fermeture à tourniquet selon l'une des revendications 1 ou 2, caractérisé en ce que la surface frontale (66) du masque (44) est dans l'alignement de la surface frontale de l'embout de réception de la clé ou n'est que faiblement en retrait par rapport à lui.

4. Dispositif de fermeture à tourniquet selon l'une des revendications 1 à 3, caractérisé en ce que la tête (22) du bloc (20) comporte dans la zone de transition aboutissant à la pièce médiane (24), une zone en retrait périphérique (92) pour l'insertion d'un joint torique (90).

5. Dispositif de fermeture à tourniquet selon l'une des revendications 1 à 4, caractérisé en ce que le masque (44) est maintenu par un capuchon de tôle qui enserre le bord extérieur de l'embout de réception (14) de la clé.

6. Dispositif de fermeture à tourniquet selon l'une des revendications 1 à 4, caractérisé en ce que le masque (44) est fixé dans l'embout de réception de la clé par collage, par coincement ou par pression.

7. Dispositif de fermeture à tourniquet selon l'une des revendications 1 à 4, caractérisé en ce que le masque (44) est constitué par un capuchon enserrant le bord extérieur de l'embout de réception (14) de la clé.

8. Dispositif de fermeture à tourniquet selon l'une des revendications 1 à 7, caractérisé en ce que pour des clés à double panneton (46) le masque comporte une fente double ou deux fentes doubles perpendiculaires l'une à l'autre.

Fig.2.

Fig.1.

Fig.3.

Fig.4.

Fig.5

Fig.6.

Fig.7.